# EUROPEAN PATENT SPECIFICATION

(11) **EP 1 754 350 B1**
(45) Date of publication and mention of the grant of the patent: **21.11.2012**
(21) Application number: 04741584.9
(22) Date of filing: 25.05.2004
(51) Int. Cl.: H04L 12/58

(54) **METHOD AND SYSTEM FOR INFORMATION DISTRIBUTION**
VERFAHREN UND SYSTEM ZUR INFORMATIONSVERTEILUNG
PROCEDE ET SYSTEME DE DISTRIBUTION D'INFORMATIONS

(43) Date of publication of application: 21.02.2007
(73) Proprietor: International Business Machines Corporation, Armonk, NY 10504 (US)
(72) Inventor: JINKS, William, Richard, Havant Hampshire PO9 2FJ (GB); NOBLE, Gary, Paul, Near Broadway Worcestershire WR12 7NA (GB)
(74) Representative: Williams, Julian David
(86) International application number: PCT/EP2004/050824
(87) International publication number: WO 2005/116882

(56) References cited:
- WO-A-02/103570
- KR-A- 2001 045 237
- US-A- 5 892 909
- US-A1- 2002 126 120
- US-B1- 6 453 438

## Description

### Technical Field

This invention relates to the field of information distribution. In particular, the invention relates to cascading information to on-line groups or communities of users and dynamically evolving membership of the groups by the users.

### Background Art

Messaging services connected by a network have developed as a fast means of communication with a wide audience of users. The network may be a local area network (LAN) consisting of a few users or a wide area network (WAN) with users distributed over a vast geographic area. For example, the Internet has worldwide coverage and is a frequently used network for messaging. Messaging via any form of network is defined herein as on-line messaging.

Users are collected into groups with each user being a member of any number of groups. The groups may evolve naturally or be artificially created. Groups may be defined by an infinite number of topics such as geographic location, language, profession, religion, common interest, etc. Within a group messages can be distributed to every member or sub-sets of the members. Messages often take the form of questions looking for information sent by one member of a group referred to as group collaboration.

The increased use of on-line messaging services for group collaboration has introduced messaging overload. Over time, messaging overload will reduce the efficiency of such group collaboration.

Examples of messaging scenarios which illustrate the problems of group collaboration messaging are as follows.
- Questions may be aimed at a group where no-one knows the answer.
- Each user does not have knowledge of what other groups may be able to answer a question.
- Submission of questions to an "everyone" group, in the hope of an answer.

As the on-line community expands, this can develop into "spam", so users often turn off their subscription to the "everyone" group. Thus the question may not be seen by someone who can answer it.

The explosion in messaging and the reduction in efficiency also increases the capacity requirements for central IT facilities. For example, directory services may become overloaded and network bandwidth may not cope with the volume of communication. These problems result in delays and inefficiency in messaging.

US 5,892,909 discloses a system that allows users to manage the distribution and delivery of information. The system provides a method so that, as organizational changes occur, the system ensures that the most current, relevant information is made available to appropriate eligible subscribers. Subscriber lists of a distribution automatically respond to changes in group composition, accommodating new or departing individuals within the organization as well as accommodating changing organizational roles.

US 6,453,438 discloses a method for managing a session during which data is sent to receivers, wherein retransmission of the data to the receivers can be automatically rescheduled if the receiver did not receive some or all of the data.

US 6,529,882 discloses a method for strictly managing group membership in Internet multicast applications. In a group creation and enrolment step, a group management server creates a group and performs group registration.

WO 02/103570 discloses a method for utilizing dynamic groups to manage user groups in a networked computer system.

US 2002/0126120 discloses an electronic board system with a screen for displaying information of interest to a work group or community, and an input device for receiving information from users in a group or community.

The aim of the present invention is to extend and introduce new capabilities in making connections between groups or communities in an on-line environment and to improve the efficiency of collaboration between on-line users.

According to a first aspect of the present invention there is provided a system for information distribution as defined in claim 1.

According to a second aspect of the present invention there is provided a method for information distribution as defined in claim 13.

According to an aspect of the present invention there is provided a system for information distribution including: a plurality of users; a plurality of groups wherein a user is a member of any number of the groups; and a message having an originating group or groups and defining a cascade of groups to which the message is to be sent; wherein the membership of the originating group or groups by a user evolves based on the response made by the user to the message.

Preferably, there is provided a means for a message to traverse the plurality of groups and be received by users who are not members of the originating group or groups.

A message may have an originating user and the originating group or groups is one or more of the groups of which the originating user is a member. Preferably, the groups in the cascade are not limited to the groups of which the originating user is a member. Means may be provided for the originating user to configure the cascade, the configuration including authorising the next stage of the cascade and stopping the cascade.

Preferably, the membership of the originating group or groups has a plurality of different categories. The categories may include a participating member, a contributor and an observer.

Preferably, the response made by a user to the message is one of a number of different types of response, including no action, an observation, and a contribution. The membership of the originating group or groups may evolve to a category of membership based on the type of response made.

There may be provided a means for storing relationships between groups as the basis for cascades, the means having an interface for management of the relationships. There may be provided a group administrator for managing the membership of a group. A group may have rules for membership and movement between categories of membership.

A message may be tagged with the path it takes through the groups to ensure that a user does not receive a message twice due to membership of multiple groups.

The users may be users of a network and the message is sent and received via the network.

According to a second aspect of the present invention, there is provided a method for information distribution including: an originating user creating a message; the originating user selecting an originating group or groups for the message from the one or more groups of which the originating user is a member; the originating user defining a cascade of groups to which the message is to be sent; wherein membership of the originating group or groups by a user receiving the message evolves based on the response made by the receiving user to the message.

The originating user may be prompted to authorise each stage of the cascade and the originating user may stop the cascade.

According to a third aspect of the present invention there is provided a computer program product stored on a computer readable storage medium comprising computer readable program code means for performing the steps of: creating a message from an originating user; selecting an originating group or groups for the message from the one or more groups of which the originating user is a member; defining a cascade of groups to which the message is to be sent; evolving membership of the originating group or groups by a user receiving the message based on the response made by the receiving user to the message.

### Brief Description of the Drawings

Embodiments of the present invention will now be described, by way of examples only, with reference to the accompanying drawings in which:
Figure 1 is a representation of users and groups in accordance with the present invention;
Figure 2 is a representation of a plurality of groups in accordance with the present invention;
Figure 3 is a representation of a message in accordance with the present invention;
Figures 4A and 4B are representations of group memberships before and after a message is sent and responded to; and
Figure 5 is the representation of Figure 2 amended to show the change in membership after the messages of Figures 4A and 4B.

### Mode for the Invention

In a network of on-line users, the users may belong to any number of groups or communities defined by common interests, geographical location, work place or any other topic or common denominator.

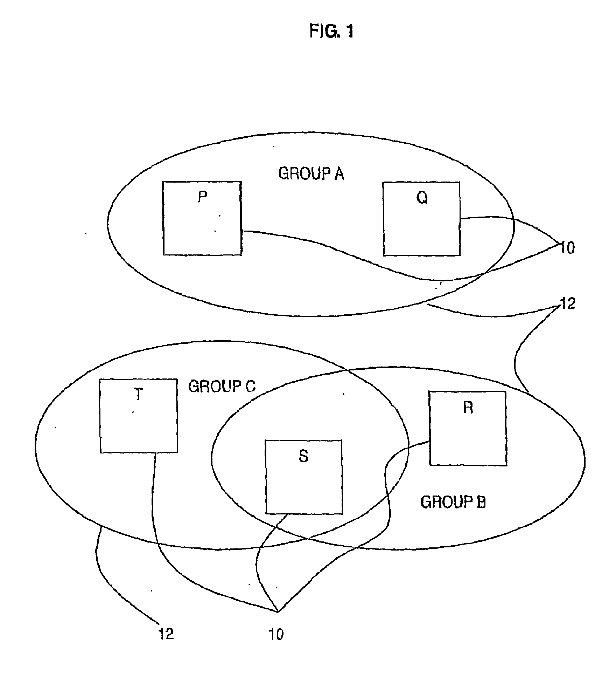

Figure 1 shows a simple arrangement of a plurality of users 10 and their membership of different groups 12. In Figure 1, users P and Q are members of group A. Users S and R are members of group B. User S is also a member of group C as well as user T. This arrangement is used to illustrate the invention in simple relationships. In practice, the number of users and the diversity of groups will be much greater.

The users 10 are all connected via a network such that messages can be sent from any one user to any other one or more users.

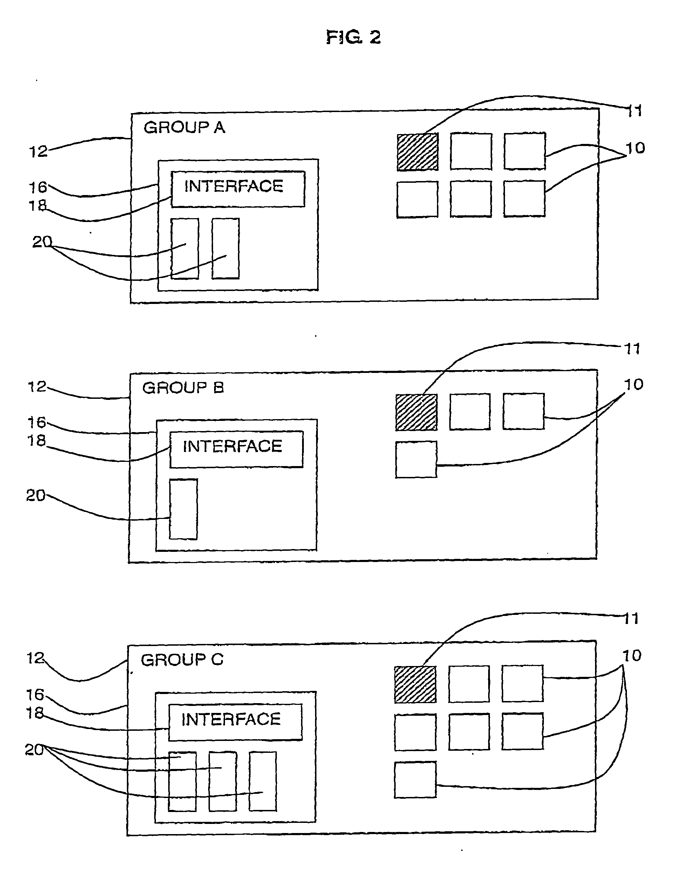

Figure 2 shows a system with three groups 12 with members 10. Each group 12 has an administrator 11 or group owner. The administrator 11 may be one of the group members 10. Each group 12 includes a mechanism 16 for storing relationships between the groups 12.

The mechanism 16 includes an interface 18 for the administrator 11 to manage the relationships between groups 12. In one embodiment, the mechanism 16 stores the relationships as a list 20 of groups to try in order, referred to as a cascade. There may be one or more such lists 20 starting from a particular group 12.

A message sent by a member 10 from a first group A can traverse groups 12 and thereby be received by users who are not members of the originating first group A. The message can follow one of the lists 20 of groups as the defined relationships with the other groups 12. As an alternative, the message can follow a subset of the defined relationships selected by the message originator.

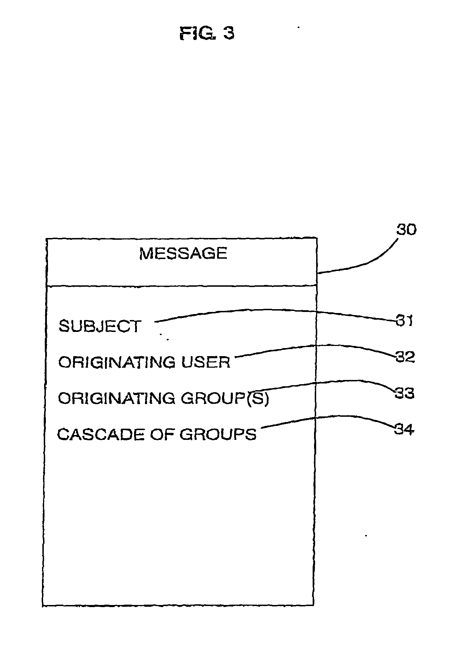

A message 30 as show in Figure 3, has a subject 31, an originator 32 which is the user who sent the message 30, an originating group or groups 33 which is one or more of the groups selected by the user from the set of groups the user is a member of, and the cascade 34 of groups in the order to which the message 30 is to be sent.

The message originator 32 is able to configure the cascade 34. Configuration of the cascade includes the user who is the originator 32 having: the ability to be prompted and authorise each stage of the cascade; the ability to stop the cascade after a predefined time limit; and the ability to stop the cascade immediately. If the user is prompted to authorise the next stage of the cascade 34, the system will prompt the user with the next groups in the cascade. The user can select a subset of these groups to follow, eliminating groups that are deemed by the user to be less relevant to the particular message.

A user can participate in multiple groups and each group has multiple tiers of participation. This takes the form of different categories of membership, as follows:
- "Member" - The user has been assigned into the group by the group owner and is a full participant in the group.
- "Contributor" - The user has contributed to the group and thus their participation in the group is implied.
- "Observer" - The user has expressed an interest in the proceedings of the group and thus participation in the group is requested.

A system is provided to store and manage the relationships between users and groups. Existing directory services can be used to implement the relationship types of group membership. For example, an Internet Directory Service could be used.

A mechanism is provided for a recipient user to respond to a message in a number of different ways. If the message is from a group to which the recipient user does not belong, the form of response will dictate the form of future membership of the recipient user with the originating group. The forms of response which may be generated are as follows:
- No response - Do not wish to handle.
- A "content" response - Wish to handle now.
- An "interest" response - Wish to handle later or wish to observe.

A recipient user will receive a message display with selectable options for the possible forms of response to the message which then automatically categorise the form of response made.

A protocol is provided for the dynamic creation of relationships between users and groups based on the message/response pair, as follows:
- A user receives a message that originates from a group to which they do not belong. The user responds to the message with a "content" response. A "contributor" relationship is then implied from the user to the originator group.
- A user receives a message that originates from a group to which they do not belong. The user responds to the message with an "interest" response. An "observer" relationship is then implied from the user to the originator group.

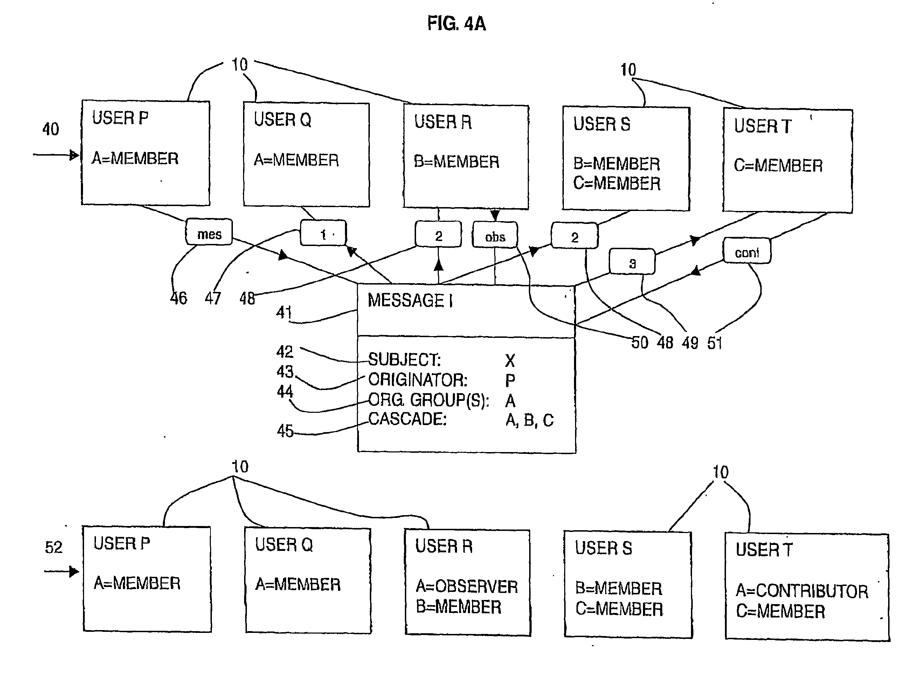

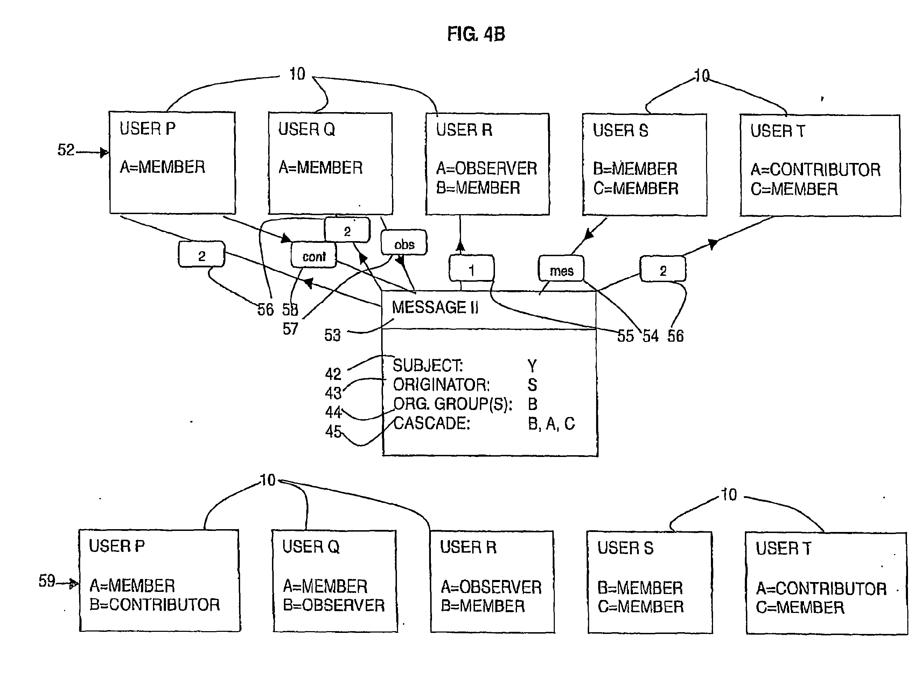

Referring to Figures 4A and 4B, an example of the evolution of membership of groups is shown. In Figure 4A, five users 10 are shown and each user 10 is a member of one or more groups. The user's 10 membership of groups at a first time 40 is shown at the top of the figure.

One of the users 10, user P, creates 46 a message 41. The message 41 has the following information tagged to it. A subject 42 which is designated X. The originator 43 which is user P. The originating group or groups 44 which may be any one or more groups to which user P belongs, chosen by user P. In this case user P only belongs to group A and therefore the originating group 44 is group A. A cascade 45 configured by user P which is a list of groups in the order in which the message is to be distributed. In this case the cascade 45 is group A, followed by group B, followed by group C.

User P then sends the message 41. The message 41 is first sent 47 to other members of group A which in this example is only user Q. The message 41 is then sent in a second wave 48 to members of group B which in this example are user R and user S. The message 41 is then sent in a third wave 49 to members of group C which in this example are user S and user T.

User S has already been sent the message 41 as a member of group B and therefore does not get sent the message a second time.

A mechanism is provided to prevent an individual user 10 from receiving a message 41 more than once due to membership of multiple groups as the message 41 cascades through the network of groups. Each message 41 is tagged with the path it takes through the network of groups.

For example, message 41 may keep a record of the addresses of each user 10 to which the message 41 has been sent. If an address of a user 10 is repeated, the message 41 is not sent to the user 10 after the first transmission to that user 10.

Alternatively, the message 41 may keep a record of each group. At each cascade, the user set can be derived as the users which are members of the new groups who are not members of the previous groups.

User R responds to the message 41 with an observation 50 which is a form of an 'interest" response as defined previously. User T responds to the message with a contribution 51 which is a form of a "content" response as defined previously.

The originating user has the control of when to terminate a cascade. If a message is answered early on in the transmission cascade, the originating user may decide to stop the subsequent transmissions. The originating user may be prompted at each stage of the cascade to authorise the next wave of transmissions. In the example shown in Figure 4A, user R responds 50 to the message 41 with an observation. If user R had responded to the message with a contribution that answered the message 41, the originating user, user P, would have the choice of terminating the cascade 45 without sending the message to the members of group C.

The observation 50 made by user R and the contribution 51 made by user T result in changes to the group membership of user R and user T. User R becomes an observer of group A and user T becomes a contributor of group A.

Referring now to Figure 4B, the users 10 at time 52 at the bottom of Figure 4A, are shown at the top of Figure 4B. A new message 53 is now created 54 by user S.

The message 53 has the following information tagged to it. A subject 42 which is designated Y. The originator 43 which is user S. The originating group or groups 44 which may be any one or more of the groups to which user S belongs, chosen by user S. In this case user S belongs to groups B and C and user S chooses an originating group 44 as group B. A cascade 45 configured by user S which is a list of groups in the order in which the message is to be distributed. In this case the cascade 45 is group B, followed by group A, followed by group C.

User S then sends the message 53. The message 53 is first sent 55 to other members of group B which in this example is only user R. The message 53 is then sent in a second wave 56 to members of group A which in this example are users P and Q which are full members of group A and user T which is a contributor of group A. User R is an observer of group A but has already been sent the message 53 as a member of group B and therefore is not sent the message 53 a second time. There are no members of group C who have not already received the message 53 and therefore the cascade 45 is terminated. User P responds to the message 53 with a contribution 57 and user Q responds to the message 53 with an observation. These responses by users P and Q result in the further evolution of the membership of the groups. User P becomes a contributor to group B and user Q becomes an observer of group B. This is shown in the updated memberships of the users 10 shown at time 59 at the bottom of Figure 4B.

A mechanism is provided for messages to be replayed to a user after a time period. This may arise in the following situations.
- The user indicated an interest to answer later, but has not yet responded.
- The user has been off-line for a period and requests messages to be relayed.
- The user has come on-line and could answer a question that is still open and within a reasonable time period.

A mechanism is provided for the administrator of a group to view and manage the group membership including the categories of full members, contributors and observers. The group administrator can also manipulate the group's membership manually.

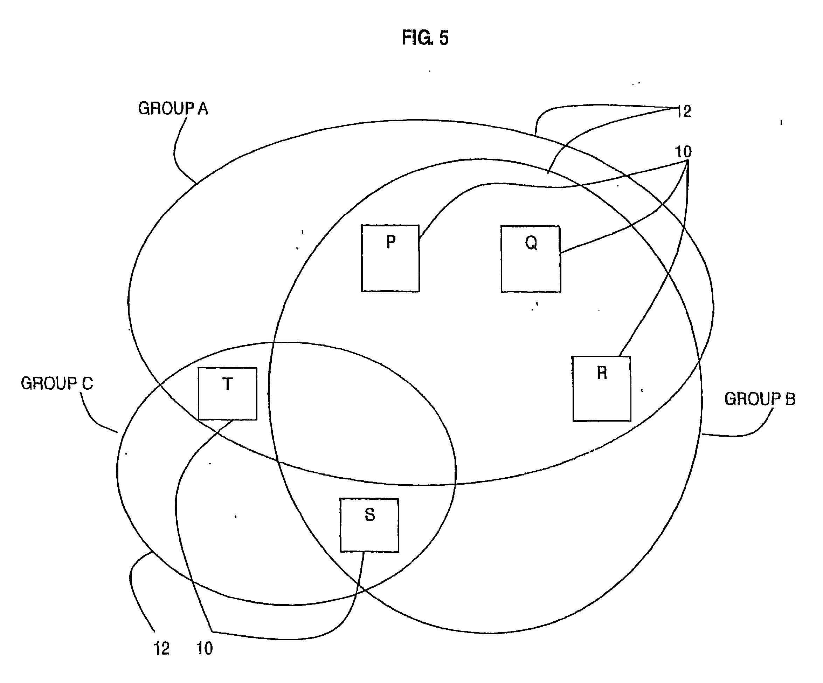

Figure 5 is a version of Figure 1 showing how the membership of the groups 12 by the users 10 has evolved after the messages 41, 53 of Figures 4A and 4B have been processed.

The table given below shows the changes in membership of groups A and B after the messages 41, 53 of Figures 4A and 4B have been processed.

### Group A

**Table 1**

| **Start** | **After Message 41** | **After Message 53** |
|---|---|---|
| User P (Member) | User P (Member) | User P (Member) |
| User Q (Member) | User Q (Member) | User Q (Member) |
| | User R (Observer) | User R (Observer) |
| | User T (Contributor) | User T (Contributor) |

### Group B

**Table 2**

| **Start** | **After Message 41** | **After Message 53** |
|---|---|---|
| User R (Member) | User R (Member) | User R (Member) |
| User S (Member) | User S (Member) | User S (Member) |
| | | User P (Contributor) |
| | | User Q (Observer) |

In this way, group membership can evolve based on the level of interest shown to messages by users outside a group from which the message originated. The level of interest is defined in this example as contributions or observations. Many additional levels of interest may be defined resulting in further tiers of membership of a group.

In addition, if a user subsequently does not respond to messages from a group for a predetermined period of time, the user's membership level of that group may evolve to reflect a lapse of interest in the messages of the group. This can be manipulated manually by the group administrator at the group administrator's discretion.

Alternatively, a group can have a set of rules governing membership of the group. For contributors, this could be the number of responses that warrant conversion to full membership. For observers, this could be a timet after which the observer is deleted from the group if no contribution is forthcoming. Rules may also allow a group to accept or not accept contributors or observers. In the case of not accepting contributors or observers, a message is delivered and responses received but no new user/group relationships are formed.

The present invention is typically implemented as a computer program product, comprising a set of program instructions for controlling a computer or similar device. These instructions can be supplied persuaded into a system or recorded on a storage medium such as a CD-ROM, or made available for down loading over a network such as the Internet or a mobile telephone network.

Improvements and modifications can be made to the foregoing without departing from the scope of the present invention.

## Claims

1. A system for information distribution comprising:
an interface means (18) for managing a relationship between a plurality of groups (12) and a plurality of users (10), wherein at least one of the plurality of users (10) is a member of any number of the plurality of groups (12);
the interface means (18) further comprising means for defining a cascade of groups to which a message is to be sent and each message having an originating group and an associated protocol for evolving the membership of the originating group based on the response made by the user (10) to the message;
wherein a message includes content to be distributed to one or more groups on which a response can be made by a user (10);
wherein the membership of the originating group (33) comprises a plurality of different categories;
**characterised by** the interface means further comprising means for evolving the membership of the originating group to a category of membership based on the type of response made by a user.

2. A system as claimed in claim 1, wherein there is provided a means for a message to traverse the plurality of groups (12) and be received by users (10) who are not members of the originating group or groups (33).

3. A system as claimed in claim 1 or claim 2, wherein a message (30) has an originating user (32) and the originating group or groups (33) is one or more of the groups (12) of which the originating user (32) is a member.

4. A system as claimed in claim 3, wherein the groups in the cascade (34) are not limited to the groups of which the originating user (32) is a member.

5. A system as claimed in claim 3 or claim 4, wherein means are provided for the originating user (32) to configure the cascade (34), the configuration including authorising the next stage of the cascade (34) and stopping the cascade (34).

6. A system as claimed in claim 1, wherein the categories include a participating member, a contributor and an observer.

7. A system as claimed in any one of the preceding claims, wherein the response made by a user to the message (30) is one of a number of different types of response, including no action, an observation, and a contribution.

8. A system as claimed in claim 1, wherein the interface means further comprises a means (16) for storing relationships (20) between groups (12) as the basis for cascades (34).

9. A system as claimed in any one of the preceding claims, wherein there is provided a group administrator (11) for managing the membership of a group (12).

10. A system as claimed in any one of the preceding claims, wherein a group (12) has rules for membership and movement between categories of membership.

11. A system as claimed in any one of the preceding claims, wherein a message (30) is tagged with the path it takes through the groups (12) to ensure that a user (10) does not receive a message twice due to membership of multiple groups (12).

12. A system as claimed in any one of the preceding claims, wherein the users (10) are users of a network and the message is sent and received via the network.

13. A method for information distribution comprising:
managing a relationship between a plurality of groups (12) and a plurality of users (10) by an interface (18), wherein at least one of the plurality of users (10) is a member of any number of the plurality of groups (12);
defining a cascade of groups to which a message is to be sent, each message having an originating group, and evolving membership of the originating group based on the response made by a user (10) to the message;
wherein a message includes content to be distributed to one or more groups on which a response can be made by a user (10);
wherein the membership of the originating group or groups (33) has a plurality of different categories;
**characterised by** evolving to a category of membership, based on the membership of the originating group, to a category of membership based on the type of response made by the user.

14. A method as claimed in claim 13, wherein the originating user (32) is prompted to authorise each stage of the cascade (34).

15. A method as claimed in claim 13 or claim 14, wherein the originating user (32) can stop the cascade (34).

16. A computer program product directly loadable into the internal memory of a digital computer, comprising software code portions for performing the steps of any one of claim 13 to claim 15 when said product is run on a computer.

## Patentansprüche

1. System für die Informationsverteilung, das Folgendes umfasst:
ein Schnittstellenmittel (18) für das Verwalten einer Beziehung zwischen einer Vielzahl von Gruppen (12) und
einer Vielzahl von Benutzern (10), wobei mindestens einer aus der Vielzahl von Benutzern (10) ein Mitglied in einer beliebigen Anzahl von Gruppen aus der Vielzahl von Gruppen (12) ist;
wobei das Schnittstellenmittel (18) ferner ein Mittel für das Definieren einer Kaskade von Gruppen umfasst, an die eine Nachricht gesendet werden soll, und wobei jede Nachricht über eine Ursprungsgruppe und ein zugehöriges Protokoll verfügt, um die Mitgliedschaft der Ursprungsgruppe auf der Grundlage der Antwort, die der Benutzer (10) auf die Nachricht gibt, zu erhalten;
wobei eine Nachricht Inhalt enthält, der an die eine oder
mehrere Gruppen verteilt werden soll, auf den eine Antwort durch einen Benutzer (10) erfolgen kann;
wobei die Mitgliedschaft der Ursprungsgruppe (33) eine Vielzahl von unterschiedlichen Kategorien umfasst;
**dadurch gekennzeichnet, dass** das Schnittstellenmittel ferner ein Mittel umfasst, um die Mitgliedschaft der Ursprungsgruppe zu einer Kategorie von Mitgliedschaft zu erhalten, die auf der Art der durch einen Benutzer (10) gegebenen Antwort beruht.

2. System nach Anspruch 1, wobei ein Mittel bereitgestellt wird, mit dem eine Nachricht die Vielzahl von Gruppen (12) durchläuft und durch Benutzer (10) empfangen wird, die nicht Mitglieder der Ursprungsgruppe oder -gruppen (33) sind.

3. System nach Anspruch 1 oder 2, wobei eine Nachricht (30) einen Ursprungsbenutzer (32) hat und wobei die Ursprungsgruppe oder -gruppen (33) eine oder mehrere der Gruppen (12) ist/sind, deren Mitglied der Ursprungsbenutzer (32) ist.

4. System nach Anspruch 3, wobei die Gruppen in der Kaskade (34) nicht auf die Gruppen beschränkt sind, deren Mitglied der Ursprungsbenutzer (32) ist.

5. System nach Anspruch 3 oder 4, wobei ein Mittel bereitgestellt wird, mit dem der Ursprungsbenutzer (32) die Kaskade (34) konfiguriert, wobei die Konfiguration die Berechtigungserteilung für die nächste Stufe der Kaskade (34) und das Stoppen der Kaskade (34) beinhaltet.

6. System nach Anspruch 1, wobei die Kategorien ein teilnehmendes Mitglied, einen Beitragsverfasser und einen Beobachter beinhalten.

7. System nach einem beliebigen der vorhergehenden Ansprüche, wobei die Antwort eines Benutzers auf die Nachricht (30) aus einer aus einer Anzahl verschiedener Arten von Antworten besteht, darunter keine Aktion, eine Beobachtung und ein Beitrag.

8. System nach Anspruch 1, wobei das Schnittstellenmittel ferner ein Mittel (16) für das Speichern von Beziehungen (20) zwischen Gruppen (12) als der Grundlage für Kaskaden (34) umfasst.

9. System nach einem beliebigen der vorhergehenden Ansprüche, wobei ein Gruppenadministrator (11) bereitgestellt wird, um die Mitgliedschaft einer Gruppe (12) zu verwalten.

10. System nach einem beliebigen der vorhergehenden Ansprüche, wobei eine Gruppe (12) über Regeln für die Mitgliedschaft und die Verschiebung zwischen Mitgliedschaftskategorien verfügt.

11. System nach einem beliebigen der vorhergehenden Ansprüche, wobei eine Nachricht (30) mit dem Pfad, den sie durch die Gruppen (12) nimmt, markiert ist, um sicherzustellen, dass ein Benutzer (10) eine Nachricht aufgrund einer Mitgliedschaft in mehreren Gruppen (12) nicht doppelt empfängt.

12. System nach einem beliebigen der vorhergehenden Ansprüche, wobei die Benutzer (10) Benutzer eines Netzwerks sind und die Nachricht über das Netzwerk gesendet und empfangen wird.

13. Verfahren für die Informationsverteilung, das Folgendes umfasst:
Verwalten einer Beziehung zwischen einer Vielzahl von Gruppen (12) und einer Vielzahl von Benutzern (10) durch eine Schnittstelle (18), wobei mindestens einer aus der Vielzahl von Benutzern (10) ein Mitglied in einer beliebigen Anzahl von Gruppen aus der Vielzahl von Gruppen (12) ist;
Definieren einer Kaskade von Gruppen, an die eine Nachricht gesendet werden soll, wobei jede Nachricht über eine Ursprungsgruppe verfügt, und Erhalten der Mitgliedschaft der Ursprungsgruppe auf der Grundlage der Antwort, die ein Benutzer (10) auf die Nachricht gibt;
wobei eine Nachricht Inhalt enthält, der an eine oder
mehrere Gruppen verteilt werden soll, auf den eine Antwort durch einen Benutzer (10) erfolgen kann;
wobei die Mitgliedschaft der Ursprungsgruppe oder -gruppen (33) über eine Vielzahl von unterschiedlichen Kategorien verfügt;
**dadurch gekennzeichnet, dass** auf der Grundlage der Mitgliedschaft der Ursprungsgruppe eine Kategorie von Mitgliedschaft erhalten wird, die auf der Art der durch den Benutzer gegebenen Antwort beruht.

14. Verfahren nach Anspruch 13, wobei der Ursprungsbenutzer (32) aufgefordert wird, für jede Stufe der Kaskade (34) eine Berechtigung zu erteilen.

15. Verfahren nach Anspruch 13 oder 14, wobei der Ursprungsbenutzer (32) die Kaskade (34) stoppen kann.

16. Computerprogrammprodukt, das direkt in den internen Speicher eines digitalen Computers geladen werden kann und Software-Codeteile umfasst, um die Schritte eines beliebigen der Ansprüche 13 bis 15 durchzuführen, wenn das Produkt auf einem Computer ausgeführt wird.

## Revendications

1. Système pour la distribution d'informations, le système comprenant :
un moyen d'interface (18) pour la gestion d'une relation entre une pluralité de groupes (12) et une pluralité d'utilisateurs (10), où au moins l'un parmi la pluralité d'utilisateurs (10) est un membre de n'importe quel nombre de la pluralité de groupes (12) ;
le moyen d'interface (18) comprenant en outre un moyen pour la définition d'une cascade de groupes auxquels un message doit être envoyé, et chaque message ayant un groupe d'origine et un protocole associé pour l'évolution de l'adhésion au groupe d'origine, sur la base de la réponse faite par l'utilisateur (10) suite au message ;
dans lequel un message inclut du contenu à distribuer à un ou plusieurs groupes, suite auquel une réponse peut être faite par un utilisateur (10) ;
dans lequel l'adhésion au groupe d'origine (33) comprend une pluralité de catégories différentes ;
**caractérisé en ce que** le moyen d'interface comprend en outre un moyen pour l'évolution de l'adhésion au groupe d'origine vers une catégorie d'adhésion, sur la base du type de réponse faite par un utilisateur.

2. Système selon la revendication 1, dans lequel il est prévu un moyen permettant à un message de traverser la pluralité de groupes (12) et d'être reçu par des utilisateurs (10) qui ne sont pas des membres du groupe ou des groupes d'origine (33).

3. Système selon la revendication 1 ou la revendication 2, dans lequel un message (30) a un utilisateur d'origine (32), et le groupe ou les groupes d'origine (33) est/sont un ou plusieurs des groupes (12) dont l'utilisateur d'origine (32) est membre.

4. Système selon la revendication 3, dans lequel les groupes dans la cascade (34) ne sont pas limités aux groupes dont l'utilisateur d'origine (32) est membre.

5. Système selon la revendication 3 ou la revendication 4, dans lequel il est prévu un moyen permettant à l'utilisateur d'origine (32) de configurer la cascade (34), la configuration incluant l'autorisation de l'étape suivante de la cascade (34) et l'arrêt de la cascade (34).

6. Système selon la revendication 1, dans lequel les catégories incluent un membre participant, un contributeur et un observateur.

7. Système selon l'une quelconque des revendications précédentes, dans lequel la réponse faite par un utilisateur au message (30) est l'une parmi un certain nombre de différents types de réponses, y compris pas d'action, une observation et une contribution.

8. Système selon la revendication 1, dans lequel le moyen d'interface comprend en outre un moyen (16) pour stocker des relations (20) entre les groupes (12), comme base pour des cascades (34).

9. Système selon l'une quelconque des revendications précédentes, dans lequel il est prévu un administrateur de groupe (11) pour la gestion de l'adhésion à un groupe (12).

10. Système selon l'une quelconque des revendications précédentes, dans lequel un groupe (12) a des règles pour l'adhésion et le passage entre les catégories d'adhésion.

11. Système selon l'une quelconque des revendications précédentes, dans lequel un message (30) est marqué avec le chemin qu'il emprunte à travers les groupes (12), pour assurer qu'un utilisateur (10) ne reçoive pas un message deux fois en raison de l'adhésion à une multitude de groupes (12).

12. Système selon l'une quelconque des revendications précédentes, dans lequel les utilisateurs (10) sont des utilisateurs d'un réseau, et le message est envoyé et reçu par le réseau.

13. Procédé pour la distribution d'informations, le procédé comprenant :
la gestion d'une relation entre une pluralité de groupes (12) et une pluralité d'utilisateurs (10) à l'aide d'une interface (18), où au moins l'un parmi la pluralité d'utilisateurs (10) est un membre de n'importe quel nombre de la pluralité de groupes (12) ;
la définition d'une cascade de groupes auxquels un message doit être envoyé, chaque message ayant un groupe d'origine, et l'évolution de l'adhésion au groupe d'origine, sur la base de la réponse faite par un utilisateur (10) suite au message ;
dans lequel un message inclut du contenu à distribuer à un ou plusieurs groupes, suite auquel une réponse peut être faite par un utilisateur (10) ;
dans lequel l'adhésion au groupe ou aux groupes d'origine (33) comporte une pluralité de catégories différentes ;
**caractérisé par** l'évolution vers une catégorie d'adhésion,
sur la base du type de réponse faite par l'utilisateur.

14. Procédé selon la revendication 13, dans lequel l'utilisateur d'origine (32) est invité à autoriser chaque étape de la cascade (34).

15. Procédé selon la revendication 13 ou la revendication 14, dans lequel l'utilisateur d'origine (32) peut arrêter la cascade (34).

16. Produit de programme informatique chargeable directement dans la mémoire interne d'un ordinateur, comprenant des portions de code logiciel pour exécuter les étapes de l'une quelconque des revendications 13 à 15, lorsque ledit produit est exécuté sur un ordinateur.
